# EUROPÄISCHE PATENTSCHRIFT

(11) **EP 3 505 021 B1**
(45) Veröffentlichungstag und Bekanntmachung des Hinweises auf die Patenterteilung: **24.03.2021**
(21) Anmeldenummer: 18210976.9
(22) Anmeldetag: 07.12.2018
(51) Int. Cl.: A47J 31/40, A47J 31/44, A47J 31/52

(54) **VERFAHREN ZUM KONFIGURIEREN EINER KAFFEEMASCHINE**
METHOD FOR CONFIGURING A COFFEE MACHINE
PROCÉDÉ DE CONFIGURATION D'UNE MACHINE À CAFÉ

(30) Priorität: 29.12.2017 DE 102017223894
(43) Veröffentlichungstag der Anmeldung: 03.07.2019
(73) Patentinhaber: BSH Hausgeräte GmbH, 81739 München (DE)
(72) Erfinder: Haslacher, Christian, 5303 Thalgau (AT); Huber, Michael, 6344 Walchsee (AT)

(56) Entgegenhaltungen:
- EP-A1- 3 168 815
- WO-A1-2014/169447
- CH-A2- 710 134
- US-A1- 2016 055 599

## Beschreibung

Die Erfindung betrifft ein Verfahren zum Konfigurieren einer Kaffeemaschine, insbesondere eines Kaffeevollautomaten.

Kaffeemaschinen besitzen üblicherweise einen Kaffeeauslass, über welchen das von der Kaffeemaschine zubereitete Kaffeeprodukt zu Befüllung eines Behältnisses bereitgestellt wird. Je nachdem, welches Kaffeeprodukt (z. B. Espresso, Cappuccino, Latte Macchiato) zubereitet wurde, wird ein Behältnis mit geeignetem Volumen bzw. geeigneter geometrischer Formgebung verwendet. Um die erforderliche Befüll-Menge an Kaffeeprodukt an das zu befüllende Behältnis anzupassen, ist es aus herkömmlichen Kaffeemaschinen bekannt, dass der Benutzer die erforderliche Befüll-Menge manuell an der Kaffeemaschine einstellt, wie es z.B. EP 3 168 815 A1 offenbart. Eine solche Vorgehensweise ist jedoch relativ unkomfortabel und somit benutzerunfreundlich.

Aus anderen herkömmlichen Kaffeemaschinen ist es bekannt, an der Kaffeemaschine eine geeignete Sensorik vorzusehen, welche eine Bestimmung des Befüll-Volumens des zu befüllenden Behältnisses erlaubt, wie es z.B. WO 2014/169447 A1 offenbart. Eine solche Sensorik, die beispielsweise optische Sensoren oder Lasermesssysteme umfassen kann, ist jedoch technisch sehr aufwändig und somit teuer.

Es ist eine Aufgabe der vorliegenden Erfindung, eine verbesserte Ausführungsform für eine Kaffeemaschine zu schaffen, bei welcher die oben genannten Nachteile teilweise oder gar vollständig behoben sind.

Diese Aufgabe wird durch eine Kaffeemaschine gemäß dem unabhängigen Patentanspruch 1 gelöst. Bevorzugte Ausführungsformen sind Gegenstand der abhängigen Patentansprüche.

Grundgedanke der Erfindung ist demnach, mithilfe einer Fernsteuerungseinrichtung zum Fernbedienen der Kaffeemaschine - dabei kann es sich insbesondere um ein Smartphone handeln, auf welchem eine geeignete Applikation, also eine geeignete Software zum Steuern der Kaffeemaschine installiert ist - Daten zu erzeugen, die an die Kaffeemaschine übertragen und dort beim Befüllen eines Behältnisses mit Kaffeeprodukt berücksichtigt werden. Erfindungsgemäß handelt es sich bei diesen Daten um Informationen, welche die geometrische Formgebung und Größe des Behältnisses betreffen, sodass von der Kaffeemaschine aus besagten Daten ermittelt werden kann, welche Befüll-Menge an Kaffeeprodukt erforderlich ist, um das Behältnis vollständig zu befüllen. Eine manuelle Auswahl des zu befüllenden Behältnisses durch den Benutzer und eine damit verbundene, unkomfortable Benutzereingabe durch den Benutzer kann auf diese Weise entfallen. Ebenso ist es nicht erforderlich, an der Kaffeemaschine eine bereits erwähnte Sensorik bereitzustellen, um besagte Informationen betreffend Größe und Geometrie des zu befüllenden Behältnisses durch Messung zu ermitteln.

Beim erfindungsgemäßen Verfahren zum Konfigurieren einer Kaffeemaschine werden mittels einer Fernsteuerungseinrichtung zum Fernsteuern der Kaffeemaschine Daten erzeugt und an die Kaffeemaschine übertragen. Erfindungsgemäß handelt es sich um Daten, die von der Kaffeemaschine beim Befüllen eines Behältnisses mit einem von der Kaffeemaschine zubereiteten Kaffeeprodukt berücksichtigen werden.

Gemäß einer bevorzugten Ausführungsform ist die Fernsteuerungseinrichtung ein mit der Kaffeemaschine in Kommunikationsverbindung stehendes Smartphone, in welchem Programmcode zum Steuern der Kaffeemaschine gespeichert ist. Auf die Bereitstellung einer separaten Fernsteuerungseinrichtung kann somit verzichtet werden, womit erhebliche Kostenvorteile einhergehen.

Gemäß einer vorteilhaften Weiterbildung bestimmt oder berechnet die Kaffeemaschine oder, alternativ dazu, die Fernsteuerungseinrichtung, aus den Daten eine Befüll-Menge an Kaffeeprodukt, die zum Befüllen des Behältnisses erforderlich ist. Auf diese Weise kann der Befüllvorgang des Behältnisses optimiert werden. Auf diese Weise kann außerdem sichergestellt werden, dass das Behältnis nicht mit zu viel oder mit zu wenig Kaffeeprodukt befüllt wird. Falls die Fernsteuerungseinrichtung die Berechnung übernimmt, so kann das Berechnungsergebnis über die Kommunikationsverbindung an die Kaffeemaschine übertragen werden.

Alternativ oder zusätzlich kann die Kaffeemaschine in Abhängigkeit von den von der Fernsteuerungseinrichtung empfangenen Daten wenigstens eine Komponente der Kaffeemaschine ansteuern. Denkbar ist es beispielsweise, eine verstellbare Ablage, auf welcher das Behältnis zum Befüllen mit dem Kaffeeprodukt abgestellt wird, in Abhängigkeit von besagten, dass Behältnis beschreibenden Daten so zu verstellen, dass das Behältnis optimal relativ zu einem Kaffeeauslass positioniert wird, aus welchem das zubereitete Kaffeeprodukt bereitgestellt wird. Alternativ dazu kann anstelle der Ablage auch der Kaffeeauslass verstellt werden.

Gemäß einer anderen vorteilhaften Weiterbildung können die an die Kaffeemaschine übermittelten Daten in einer in der Kaffeemaschine vorhandenen Speichereinheit gespeichert werden, so dass die Daten zur Berechnung der Befüll-Menge verwendet werden können, wenn vom Benutzer der Kaffeemaschine das mit den Daten korrespondierende Behältnis zum Befüllen ausgewählt wird.

Gemäß einer vorteilhaften Weiterbildung ermittelt die Kaffeemaschine mittels der Daten ein effektives Volumen des Behältnisses, welches mit dem Kaffeeprodukt befüllt werden kann. Dies geschieht zum Bestimmen derjenigen Menge an Kaffeeprodukt, die zum Befüllen des Behältnisses erforderlich ist. Die ermittelte Menge kann in einer geeigneten, an der Kaffeemaschine vorgesehenen Anzeige oder im Display der Fernsteuerungseinrichtung angezeigt werden.

Besonders bevorzugt umfassen oder sind die von der Fernsteuerungseinrichtung an die Kaffeemaschine übertragenen Daten ein geometrisches Modell des Behältnisses. Dieses Modell wird in der Fernsteuerungseinrichtung erzeugt und an die Kaffeemaschine übertragen, so dass das Modell des Behältnisses zur Befüllmengen-Berechnung verwendet werden kann.

Gemäß einer weiteren bevorzugten Ausführungsform ist in der Fernsteuerungseinrichtung bzw. in dem Smartphone Programmcode gespeichert, mittels welchem das geometrische Modell des Behältnisses erzeugt werden kann. Ein solcher Programmcode kann besonders bevorzugt Teil einer sogenannten Applikation ("App") sein, die auf dem Smartphone als Softwareprogrammcode ausgeführt wird.

Gemäß einer anderen bevorzugten Ausführungsform wird das geometrische Modell des Behältnisses aus Bilddaten erzeugt, die in wenigstens einem Bild des Behältnisses enthalten sind, welches mittels einer ein der Fernsteuerungseinrichtung enthaltenen Kamera erzeugt wurde.

Gemäß einer anderen bevorzugten Ausführungsform ist an der Kaffeemaschine wenigstens eine Referenzmarkierung vorgesehen. Besagte Referenzmarkierung erlaubt eine Normierung der Bilddaten, wenn das Behältnis zur Erzeugung des Bildes vor der Referenzmarkierung platziert wird, so dass in dem mittels der Fernbedienungseinrichtung erzeugten Bild sowohl das Behältnis als auch die wenigstens eine Referenzmarkierung enthalten sind. Besonders bevorzugt sind mehrere solche Referenzmarkierungen, jeweils in einem wohldefinierten, besonders bevorzugt in einem äquidistanten, Abstand zueinander vorhanden. Die wenigstens eine Referenzmarkierung kann als strichartige, vorzugsweise farbige, Markierung ausgebildet sein. Zweckmäßig ist die Referenzmarkierung im Bereich einer Ablage vorgesehen, auf welcher das Behältnis zum Befüllen mit dem Kaffeeprodukt positioniert wird. Besonders zweckmäßig kann die wenigstens eine Referenzmarkierung außen an einem Gehäuse bzw. an einer Gehäusewandung der Kaffeemaschine angebracht sein.

Besonders bevorzugt umfasst oder ist das geometrische Modell des Behältnisses ein dreidimensionales Modell. Aus einem dreidimensionalen Modell lässt sich das vom Behältnis begrenzte Befüll-Volumen und somit die erforderliche Befüll-Menge an Kaffeeprodukt zum Befüllen des Behältnisses besonders genau ermitteln.

Besonders bevorzugt wird das geometrische Modell des Behältnisses unter Verwendung von wenigstens einem Parameter betreffend die Geometrie und/oder die Abmessungen des Behältnisses erzeugt. Bei dieser Variante wird der wenigstens eine Parameter vom Benutzer in die Fernsteuerungseinrichtung eingegeben.

Zweckmäßig kommen für diesen wenigstens einen Parameter in Betracht: ein oberer Durchmesser des Behältnisses, ein unterer Durchmesser des Behältnisses, sowie eine Höhe des Behältnisses. Besagte Parameter sind besonders geeignet, wenn das Behältnis durch einen Kegelstumpf modelliert werden soll.

Die Erfindung betrifft ferner eine Kaffeemaschinen-Anordnung mit einer Kaffeemaschine, insbesondere einem Kaffeevollautomaten, zum Zubereiten eines Kaffeeprodukts, sowie mit einer Fernsteuerungseinrichtung, die zum Steuern der Kaffeemaschine mit dieser in Kommunikationsverbindung steht. Erfindungsgemäß sind die Kaffeemaschine und die Fernsteuerungseinrichtung zur Durchführung des vorangehend vorgestellten Verfahrens eingerichtet. Die vorangehend erläuterten Vorteile des erfindungsgemäßen Verfahrens übertragen sich daher auch auf die erfindungsgemäße Kaffeemaschinen-Anordnung.

Weitere wichtige Merkmale und Vorteile der Erfindung ergeben sich aus den Unteransprüchen, aus der Zeichnung und aus der zugehörigen Figurenbeschreibung anhand der Zeichnung.

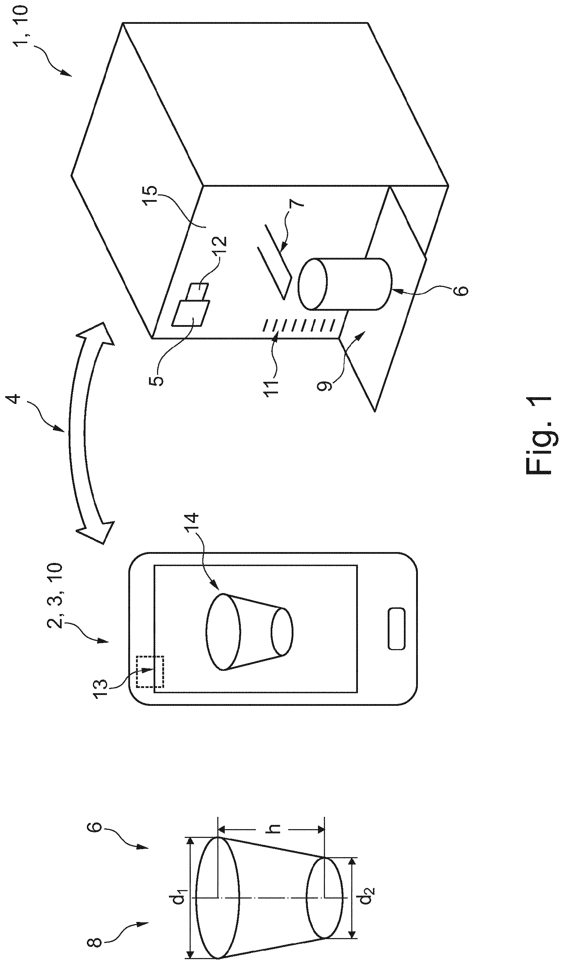

Die einzige Figur 1 zeigt in schematischer Darstellung eine Kaffeemaschine 1 zum Zubereiten eines Kaffeeprodukts sowie eine Fernsteuerungseinrichtung 2 zum Fernsteuern der Kaffeemaschine 1. Die Kaffeemaschine 1 kann als Kaffeevollautomat ausgebildet sein.

Bei der Fernsteuerungseinrichtung 2 handelt es sich um ein Smartphone 3, welches über eine Kommunikationsverbindung 4 mit der Kaffeemaschine 1 in Kommunikationsverbindung steht und in welchem Programmcode zum Steuern der Kaffeemaschine 1 gespeichert ist. Die Kommunikationsverbindung 4 kann eine herkömmliche Internet-Verbindung sein oder umfassen. Die Kaffeemaschine 1 kann eine in Figur 1 nur grobschematisch angedeutete Steuerungseinrichtung 5 aufweisen, mittels welcher die verschiedenen, zur Zubereitung eines Kaffeeprodukts erforderlichen Funktionen der Kaffeemaschine 1 gesteuert werden können. Die Fernsteuerung der Kaffeemaschine 1 erfolgt somit durch Steuerung der Steuerungseinheit 5 mittels der Fernsteuerungseinrichtung 2 über die Kommunikationsverbindung 4. Die Kaffeemaschine 1 und die Fernsteuerungseinrichtung 2 bilden zusammen eine Kaffeemaschinen-Anordnung 10.

Zur Durchführung des erfindungsgemäßen Verfahrens erzeugt die Fernsteuerungseinrichtung 2 bzw. das Smartphone 3 Daten, die von der Kaffeemaschine 1 beim Befüllen eines Behältnisses 6 mit dem von der Kaffeemaschine 1 zubereiteten Kaffeeprodukt über einen Kaffeeauslass 7 berücksichtigt werden. Hierzu werden besagte Daten nach dem Erzeugen in der Fernsteuerungseinrichtung 2 von dieser über die Kommunikationsverbindung 4 an die Steuerungseinheit 5 der Kaffeemaschine 1 übertragen. Besagte, in der Fernsteuerungseinrichtung 2 erzeugte Daten umfassen ein dreidimensionales geometrisches Modell 8 des Behältnisses 6. Bei dem auf diese Weise modellierten Behältnis 6 kann es sich beispielsweise um eine herkömmliche Tasse, insbesondere um eine Kaffeetasse in Form einer Cappuccinotasse oder einer Espressotasse, handeln.

Auf der Fernsteuerungseinrichtung bzw. dem auf Smartphone kann Programmcode gespeichert sein, mittels welchem das geometrische Modell 8 des Behältnisses 6 erzeugt werden kann. Ein solcher Programmcode kann Teil eines umfassenderen Programmcodes sein, welcher auf dem Smartphone eine mit dem Benutzer interagierende Applikation ("App") erzeugt.

Das geometrische Modell 8 des Behältnisses 6 kann unter Verwendung von mehreren Parametern erzeugt werden, welche die Geometrie bzw. die Abmessungen des Behältnisses 6 beschreiben. Zu diesem Parameter zählen beispielsweise ein oberer Durchmesser d1, ein unterer Durchmesser d2 sowie eine Höhe h des Behältnisses 6, insbesondere wenn dieses die Geometrie eines Kegelstumpfs aufweist. Je nach tatsächlicher geometrische Formgebung des Behältnisses 6 können auch andere Parameter für die Modellierung herangezogen werden.

Die Parameter können vom Benutzer des Smartphones 3 in dieses eingegeben werden und von besagter Applikation zur Modellerzeugung weiterverarbeitet werden. Nach der Erzeugung des geometrischen Modells 8 im Smartphone 3, also in der Fernsteuerungseinrichtung 2, werden die das Modell 8 beschreibenden Daten über die Kommunikationsverbindung 4 an die Steuerungseinheit 5 der Kaffeemaschine 1 übertragen. Aus den an die Kaffeemaschine 1 übertragenen Daten berechnet die Steuerungseinheit 5 eine Befüll-Menge an von der Kaffeemaschine 1 zuzubereitendem Kaffeeprodukt, welche zum Befüllen des Behältnisses 6 erforderlich ist. Insbesondere kann die Steuerungseinheit 5 der Kaffeemaschine 1 mittels der von der Fernsteuerungseinrichtung 2 erhaltenen Daten ein effektives Volumen des Behältnisses 6 berechnen, welches von der Kaffeemaschine 1 mit dem Kaffeeprodukt zu befüllen ist. Alternativ dazu kann die Berechnung des Volumens in der Fernsteuerungseinrichtung 2 erfolgen und das Berechnungsergebnis in dieser angezeigt und/oder an die Kaffeemaschine 1 übertragen werden.

Die von der Fernsteuerungseinrichtung 2 empfangenen Daten können in einer in der Kaffeemaschine 1 vorhandenen Speichereinheit gespeichert werden. Somit stehen besagte Daten zur Berechnung der erforderlichen Befüll-Menge zur Verfügung, wenn vom Benutzer das den Daten zugeordnete Behältnis 6 zum Befüllen mit dem von der Kaffeemaschine 1 zubereiteten Kaffeeprodukt ausgewählt wird.

Denkbar ist es, in der Fernsteuerungseinrichtung 2 für mehrere verschiedene Behältnisse 6 mit jeweils unterschiedlicher geometrischer Formgebung ein jeweiliges geometrisches Modell 8 zu erzeugen und die zugehörigen Daten nach Übertragung an die Kaffeemaschine 1 in einer Datenbank abzuspeichern. Somit stehen der Kaffeemaschine 1 für verschiedene Behältnisse 6 die zur Berechnung der Befüll-Menge erforderlichen Daten zur Verfügung. Je nachdem, welches Behältnis 6 vom Benutzer der Kaffeemaschine 1 ausgewählt wird, können somit zur Ausführung des Befüllvorgangs die dem ausgewählten Behältnis 6 zugeordneten Daten abgerufen und zur Berechnung der erforderlichen Befüll-Menge verwendet werden.

Die Befüllung des Behältnisses 6 kann in herkömmlicher Weise über den Kaffeeauslass 7 erfolgen, der zusammen mit einer Ablage 9, auf welcher das Behältnis 6 zum Befüllen mit dem Kaffeeprodukt angeordnet werden kann, außen an der Kaffeemaschine 1 vorgesehen ist.

In einer Variante des hier vorgestellten Verfahrens kann das geometrische Modell 8 des Behältnisses 6 aus Bilddaten erzeugt werden, die in wenigstens einem Bild des Behältnisses 6 enthalten sind, welches wiederum mittels einer in der Fernsteuerungseinrichtung 2 vorgesehenen Kamera 13 erzeugt wurde. Die Erzeugung des Modells 8 aus den Bilddaten kann ebenso wie bei der eingangs beschriebenen Variante mittels einer in der Fernsteuerungseinrichtung 2 bzw. in dem Smartphone 3 vorhandenen Applikation ("App") bzw. dem diese Applikation definierenden Programmcode erfolgen. Die Übertragung der das geometrische Modell 8 wiedergebenden Daten an die Kaffeemaschine 1 kann dann in analoger Weise wie oben beschrieben erfolgen.

Bei der Bilderzeugung mit Hilfe der in der Fernsteuerungseinrichtung 2 bzw. im Smartphone 3 vorhandenen Kamera 13 können an der Kaffeemaschine 1, vorzugsweise außen an deren Gehäuse 15 vorgesehene Referenzmarkierungen 11 herangezogen werden. Diese Referenzmarkierungen 11 können äquidistant und in einem wohldefinierten Abstand im Bereich der Ablage außen am Gehäuse 15 der Kaffeemaschine 1 angeordnet sein. Die Referenzmarkierungen 11 dienen zur verbesserten Vermessung des Behältnisses 6. Hierzu wird das Behältnis 6 auf der Ablage 9 abgestellt und mittels der Kamera 13 ein Bild des Behältnisses 6 erzeugt, in welchem somit auch die Referenzmarkierungen 11 enthalten sind. Somit können sie bei der Erzeugung des geometrischen Modells 8 berücksichtigt werden.

Unabhängig davon ist es vorstellbar, in die von der Fernsteuerungseinrichtung 2 an die Kaffeemaschine 1 übertragenen Daten nicht nur das in der Fernsteuerungseinrichtung 2 erzeugte geometrische Modell 8, sondern auch die das Bild 14 wiedergebenden Bilddaten an die Kaffeemaschine 1 zu übergeben und in der Speichereinheit 12 abzuspeichern. Somit können die Bilddaten von der Kaffeemaschine 1 für weitere Funktionalitäten verwendet werden. Denkbar ist es beispielsweise, das Bild des Behältnisses 6 in einem an der Kaffeemaschinen 1 vorhandenen Display anzuzeigen, wenn der Benutzer der Kaffeemaschine 1 unter verschiedene Kaffeeprodukten auswählen möchte.

Die über die Fernbedienungseinrichtung 2 bzw. das Smartphone 3 bereitgestellten Daten können aber nicht nur für zur Bestimmung der erforderlichen Befüllmenge an Kaffeeprodukt herangezogen werden. Denkbar ist es beispielsweise, die Ablage 9, auf welcher das Behältnis 6 zum Befüllen mit dem Kaffeeprodukt abgestellt wird, verstellbar auszubilden. Somit kann das Behältnis 6 in Abhängigkeit von besagten Daten von der Steuerungseinheit 5 der Kaffeemaschine 1 derart verstellt werden, dass das Behältnis 6 relativ zum Kaffeeauslass 7 optimal positioniert ist. Alternativ dazu ist es auch vorstellbar, den Kaffeeauslass 7 auszubilden, so dass dieser optimal zum Behältnis 6 positioniert wird.

### Bezugszeichenliste

- 1: Kaffeemaschine
- 2: Fernsteuerungseinrichtung
- 3: Smartphone
- 4: Kommunikationsverbindung
- 5: Steuerungseinheit
- 6: Behältnis
- 7: Kaffee-Auslass
- 8: geometrisches Modell
- 9: Ablage
- 10: Kaffeemaschinen-Anordnung
- 11: Referenz-Markierung
- 12: Speichereinheit
- 13: Kamera
- 14: Bild
- 15: Gehäuse

## Patentansprüche

1. Verfahren zum Konfigurieren einer Kaffeemaschine (1), gemäß welchem mittels einer Fernsteuerungseinrichtung (2) zum Fernsteuern der Kaffeemaschine (1) Daten erzeugt und an die Kaffeemaschine (1) übertragen werden, wobei die Daten von der Kaffeemaschine (1) beim Befüllen eines Behältnisses (6) mit einem von der Kaffeemaschine (1) zubereiteten Kaffeeprodukt berücksichtigen werden, **dadurch gekennzeichnet, dass** die mittels der Fernsteuerungseinrichtung (2) erzeugten Daten eine geometrische Formgebung und Größe des Behältnisses (6) betreffende Informationen sind.

2. Verfahren nach Anspruch 1, **dadurch gekennzeichnet, dass** die Fernsteuerungseinrichtung (2) ein mit der Kaffeemaschine (1) in Kommunikationsverbindung stehendes Smartphone (3) ist, in welchem Programmcode zum Steuern der Kaffeemaschine (1) gespeichert ist.

3. Verfahren nach Anspruch 1 oder 2, **dadurch gekennzeichnet, dass** die Kaffeemaschine (1) aus den Daten eine Befüll-Menge an Kaffeeprodukt bestimmt und/oder berechnet, welche zum Befüllen des Behältnisses (6) erforderlich ist, und/oder dass die Kaffeemaschine (1) in Abhängigkeit von den Daten wenigstens eine weitere Komponente der Kaffeemaschine (1) ansteuert.

4. Verfahren nach Anspruch 3, **dadurch gekennzeichnet, dass** die Daten in einer in der Kaffeemaschine (1) vorhandenen Speichereinheit (12) gespeichert werden, so dass die Daten zur Berechnung der Befüll-Menge verwendet werden können, wenn vom Benutzer der Kaffeemaschine (1) das mit den Daten korrespondierende Behältnis (6) zum Befüllen ausgewählt wird.

5. Verfahren nach einem der vorhergehenden Ansprüche, **dadurch gekennzeichnet, dass** die Kaffeemaschine (1) oder die Fernsteuerungseinrichtung (2), insbesondere zum Bestimmen der Befüll-Menge an Kaffeeprodukt, mittels der Daten ein effektives Volumen des Behältnisses (6), welches mit dem Kaffeeprodukt befüllt werden kann, bestimmt und/oder berechnet.

6. Verfahren nach einem der vorhergehenden Ansprüche, **dadurch gekennzeichnet, dass** die Daten ein geometrisches Modell (8) des Behältnisses (6) umfassen oder sind, welches in der Fernsteuerungseinrichtung (2) erzeugt und an die Kaffeemaschine (1) übertragen wird.

7. Verfahren nach einem der vorhergehenden Ansprüche, **dadurch gekennzeichnet, dass** in der Fernsteuerungseinrichtung (2) bzw. in dem Smartphone (3) Programmcode gespeichert ist, mittels welchem das geometrische Modell (8) des Behältnisses (6) erzeugt werden kann.

8. Verfahren nach Anspruch 6 oder 7, **dadurch gekennzeichnet, dass** das geometrisches Modell (8) des Behältnisses (6) aus Bilddaten erzeugt wird, die in wenigstens einem Bild (14) des Behältnisses (6) enthalten sind, das mittels einer in der Fernsteuerungseinrichtung (2) enthaltenen Kamera (13) erzeugt wurde.

9. Verfahren nach Anspruch 8, **dadurch gekennzeichnet, dass** an der Kaffeemaschine (1) wenigstens eine Referenzmarkierung (11) vorgesehen ist, welche eine Normierung der Bilddaten erlaubt, wenn das Behältnis (6) zur Erzeugung des Bildes (14) vor der wenigstens einen Referenzmarkierung (11) platziert wird, so dass in dem mittels der Fernbedienungseinrichtung (2) erzeugten Bild (14) sowohl das Behältnis (6) als auch die wenigstens eine Referenzmarkierung (11) enthalten ist.

10. Verfahren nach einem der Ansprüche 6 bis 9, **dadurch gekennzeichnet, dass** das geometrische Modell (8) des Behältnisses (6) ein dreidimensionales Modell ist oder umfasst.

11. Verfahren nach einem der Ansprüche 6 bis 10, **dadurch gekennzeichnet, dass** das geometrische Modell (8) des Behältnisses (6) unter Verwendung von wenigstens einem Parameter betreffend die Geometrie und/oder die Abmessungen des Behältnisses (6) erzeugt wird, wobei der wenigstens eine Parameter vom Benutzter in die Fernsteuerungseinrichtung (2) eingegeben wird.

12. Verfahren nach Anspruch 11, **dadurch gekennzeichnet, dass** der wenigstens eine Parameter ist: ein oberer Durchmesser des Behältnisses; und/oder ein unterer Durchmesser des Behältnisses, und/oder eine Höhe des Behältnisses.

13. Kaffeemaschinen-Anordnung (10), mit einer Kaffeemaschine (1), insbesondere einem Kaffeevollautomaten, zum Zubereiten eines Kaffeeprodukts, sowie mit einer Fernsteuerungseinrichtung (2), die zum Steuern der Kaffeemaschine (1) mit dieser in Kommunikationsverbindung steht, wobei die Kaffeemaschine (1) und die Fernsteuerungseinrichtung (2) so ausgebildet sind, dass mittels der Fernsteuerungseinrichtung (2) zum Fernsteuern der Kaffeemaschine (1) Daten erzeugt und an die Kaffeemaschine (1) übertragen werden, wobei die Daten von der Kaffeemaschine (1) beim Befüllen eines Behältnisses (6) mit einem von der Kaffeemaschine (1) zubereiteten Kaffeeprodukt berücksichtigen werden, **dadurch gekennzeichnet, dass** die mittels der Fernsteuerungseinrichtung (2) erzeugten Daten eine geometrische Formgebung und Größe des Behältnisses (6) betreffende Informationen sind.

## Claims

1. Method for configuring a coffee machine (1), according to which data is generated and transferred to the coffee machine (1) by means of a remote control facility (2) for remotely controlling the coffee machine (1), wherein the data is taken into consideration by the coffee machine (1) when filling a container (6) with a coffee product prepared by the coffee machine (1), **characterised in that** the data generated by means of the remote control facility (2) is information relating to a geometric design and size of the container (6).

2. Method according to claim 1, **characterised in that** the remote control facility (2) is a smartphone (3) that has a communication connection with the coffee machine (1) and in which program code for controlling the coffee machine (1) is stored.

3. Method according to claim 1 or 2, **characterised in that** the coffee machine (1) determines and/or calculates a fill amount of coffee product from the data, which is needed to fill the container (6), and/or that the coffee machine (1) actuates at least one further component of the coffee machine (1) as a function of the data.

4. Method according to claim 3, **characterised in that** the data is stored in a memory unit (12) present in the coffee machine (1), so that the data can be used to calculate the fill amount when the user of the coffee machine (1) selects the container (6) corresponding to the data for filling.

5. Method according to one of the preceding claims, **characterised in that** the coffee machine (1) or the remote control facility (2), in particular for determining the fill amount of coffee product, determines and/or calculates an effective volume of the container (6) that can be filled with the coffee product by means of the data.

6. Method according to one of the preceding claims, **characterised in that** the data comprises or is a geometric model (8) of the container (6), which is generated in the remote control facility (2) and transferred to the coffee machine (1).

7. Method according to one of the preceding claims, **characterised in that** program code, by means of which the geometric model (8) of the container (6) can be generated, is stored in the remote control facility (2) or in the smartphone (3).

8. Method according to claim 6 or 7, **characterised in that** the geometric model (8) of the container (6) is generated from image data that is contained in at least one image (14) of the container (6) that has been generated by means of a camera (13) contained in the remote control facility (2).

9. Method according to claim 8, **characterised in that** at least one reference marking (11) is provided on the coffee machine (1), which allows the image data to be standardised when the container (6) is placed in front of the at least one reference marking (11) in order to generate the image (14), so that both the container (6) and the at least one reference marking (11) are contained in the image (14) generated by means of the remote control facility (2).

10. Method according to one of claims 6 to 9, **characterised in that** the geometric model (8) of the container (6) is or comprises a three-dimensional model.

11. Method according to one of claims 6 to 10, **characterised in that** the geometric model (8) of the container (6) is generated by using at least one parameter relating to the geometry and/or the dimensions of the container (6), wherein the at least one parameter is entered into the remote control facility (2) by the user.

12. Method according to claim 11, **characterised in that** the at least one parameter is: an upper diameter of the container, and/or a lower diameter of the container, and/or a height of the container.

13. Coffee machine arrangement (10), with a coffee machine (1), in particular a fully automatic coffee machine, for preparing a coffee product, as well as with a remote control facility (2) that has a communication connection with the coffee machine (1) to control it, wherein the coffee machine (1) and the remote control facility (2) are embodied such that data is generated and transferred to the coffee machine (1) by means of the remote control facility (2) for remotely controlling the coffee machine (1), wherein the data is taken into consideration by the coffee machine (1) when filling a container (6) with a coffee product prepared by the coffee machine (1), **characterised in that** the data generated by means of the remote control facility (2) is information relating to a geometric design and size of the container (6).

## Revendications

1. Procédé de configuration d'une machine à café (1), selon lequel des données sont produites par un dispositif de télécommande (2) pour télécommander la machine à café (1) et sont transmises à la machine à café (1), dans lequel les données de la machine à café (1) sont prises en compte lors du remplissage d'un récipient (6) avec un produit au café préparé par la machine à café (1), **caractérisé en ce que** les données produites au moyen du dispositif de télécommande (2) sont des informations relatives au modelage géométrique et à la grandeur du récipient (6).

2. Procédé selon la revendication 1, **caractérisé en ce que** le dispositif de télécommande (2) est un smartphone (3) en liaison communicative avec la machine à café (1), dans lequel un code programme de commande de la machine à café (1) est stocké.

3. Procédé selon la revendication 1 ou 2, **caractérisé en ce que** la machine à café (1) détermine et/ou calcule, sur base des données, une quantité de produit au café à remplir, laquelle est nécessaire au remplissage du récipient (6), et/ou **en ce que** la machine à café (1) amorce, en fonction des données, au moins un autre composant de la machine à café (1).

4. Procédé selon la revendication 3, **caractérisé en ce que** les données sont stockées dans une unité de stockage (12) présente dans la machine à café (1) de sorte que les données de calcul de la quantité à remplir peuvent être utilisées quand l'utilisateur de la machine à café (1) a choisi le récipient (6) à remplir correspondant aux données.

5. Procédé selon l'une des revendications précédentes, **caractérisé en ce que** la machine à café (1) ou le dispositif de télécommande (2), en particulier pour la détermination de la quantité à remplir en produit au café, détermine et/ou calcule au moyen des données un volume effectif du récipient (6) qui doit être rempli du produit au café.

6. Procédé selon l'une des revendications précédentes, **caractérisé en ce que** les données comprennent ou sont un modèle géométrique (8) du récipient (6), lequel est produit dans le dispositif de télécommande (2) et est transmis à la machine à café (1).

7. Procédé selon l'une des revendications précédentes, **caractérisé en ce qu'**un code programme est stocké dans le dispositif de télécommande (2) ou dans le smartphone (3), au moyen duquel le modèle géométrique (8) du récipient (6) peut être produit.

8. Procédé selon la revendication 6 ou 7, **caractérisé en ce que** le modèle géométrique (8) du récipient (6) est produit sur base de données d'image, lesquelles sont contenues dans au moins une image (14) du récipient (6), laquelle est produite au moyen d'une caméra (13) contenue dans le dispositif de télécommande (2).

9. Procédé selon la revendication 8, **caractérisé en ce qu'**au moins un marquage de référence (11) est prévu sur la machine à café (1), lequel permet une normalisation des données d'image quand le récipient (6) de production de l'image (14) est placé devant au moins un marquage de référence (11) de sorte que l'image (14) produite au moyen du dispositif de télécommande (2) contient autant le récipient (6) que le au moins un marquage de référence (11).

10. Procédé selon l'une des revendications 6 à 9, **caractérisé en ce que** le modèle géométrique (8) du récipient (6) est ou comprend un modèle tridimensionnel.

11. Procédé selon l'une des revendications 6 à 10, **caractérisé en ce que** le modèle géométrique (8) du récipient (6) est produit en utilisant au moins un paramètre relatif à la géométrie et/ou aux dimensions du récipient (6), le au moins un paramètre étant indiqué par l'utilisateur dans le dispositif de télécommande (2).

12. Procédé selon la revendication 11, **caractérisé en ce que** le au moins un paramètre est : un diamètre supérieur du récipient ; et/ou un diamètre inférieur du récipient et/ou une hauteur du récipient.

13. Assemblage de machines à café (10), comprenant une machine à café (1), en particulier une machine à café automatique, destiné à la préparation d'un produit au café, ainsi qu'un dispositif de télécommande (2), lequel est en liaison communicative avec celui-ci pour commander la machine à café (1), la machine à café (1) et le dispositif de télécommande (2) étant réalisés de sorte qu'au moyen du dispositif de télécommande (2) pour télécommander la machine à café (1), des données sont produites et transmises à la machine à café (1), les données de la machine à café (1) étant prises en compte lors du remplissage d'un récipient (6) avec un produit au café préparé par la machine à café (1), **caractérisé en ce que** les données produites au moyen du dispositif de télécommande (2) sont des informations relatives au modelage géométrique et à la grandeur du récipient (6).
